**Europäisches Patentamt**

(19) **European Patent Office**

**Office européen des brevets**

(11) Numéro de publication: **0 243 288**
**B1**

(12) **FASCICULE DE BREVET EUROPEEN**

(45) Date de publication du fascicule du brevet:
21.03.90

(21) Numéro de dépôt: 87420112.2

(22) Date de dépôt: 24.04.87

(51) Int. Cl.⁴: **H01G 1/017**

(54) **Feuille diélectrique métallisée pour la réalisation de condensateurs électriques du type bobine, ainsi que condensateurs obtenus.**

(30) Priorité: 25.04.86 FR 8606229

(43) Date de publication de la demande:
28.10.87 Bulletin 87/44

(45) Mention de la délivrance du brevet:
21.03.90 Bulletin 90/12

(84) Etats contractants désignés:
BE CH DE ES GB IT LI SE

(56) Documents cités:
DE-C- 714 365
FR-A- 1 051 435
FR-A- 2 117 567
FR-E- 53 185

(73) Titulaire: BELIER INDUSTRIES, 56, Avenue Georges
Clémenceau, F-69230 Saint Genis Laval(FR)

(72) Inventeur: Gizoime, Alain La Brossonnière, Chemin de
l'Hospital Sainte Consorce, F-69260 Charbonnieres les
Bains(FR)

(74) Mandataire: Monnier, Guy et al, Cabinet
Monnier 150 Cours Lafayette B.P. 3058, F-69393 Lyon
Cédex 03(FR)

ACTORUM AG

## Description

On sait que pour la réalisation de condensateurs électriques du type bobiné, on a recours à des feuilles diélectriques constituées d'un film-support souple en papier ou en matière synthétique et d'armatures, formées soit par une feuille fine de métal conducteur, soit par déposition sur l'une de ses faces ,par exemple par vaporisation, d'une fine couche de métal (zinc ou autre) propre à constituer une armature conductrice. Chaque feuille présente le long de l'un de ses bord longitudinaux une bande non métalisée ou marge découverte, alors que sur le bord opposé, la couche de métal comporte au contraire une forte épaisseur. Pour l'obtention d'un condenseur par bobinage, on superpose deux feuilles diélectriques du genre susvisé, en prenant soin d'une part d'inverser celles-ci afin que le bord surépaissi de l'une soit disposé au-dessus de la marge de l'autre, d'autre part d'introduire un léger décalage transversal entre les deux feuilles.

Le corps cylindrique réalisé par enroulement sur lui-même d'un tel complexe est ensuite muni de deux bornes frontales de contact qui sont connectées à l'un ou à l'autre des deux bords métallisés surépaissis, et l'ensemble est généralement placé à l'intérieur d'une enveloppe isolante de protection qui laisse à découvert les bornes d'extrémités.

Le diélectrique d'un tel condensateur comporte inévitablement des défauts, de telle sorte que dès la première mise sous tension, ce diélectrique est le siège de décharges localisées, les arcs ainsi engendrés provoquant la volatilisation du métal autour des défauts. L'isolement se trouve ainsi établi, ce phénomène étant connu sous le nom de "autorégénération" ou de "cicatrisation".

Cependant, dans le cas de condensateurs soumis à des tensions relativement élevées, il peut arriver que la zone à régénérer ou "cicatriser" intéresse un nombre de spires important et que cette régénération devienne impossible. C'est pour pallier ce risque qu'on a fait comporter aux feuilles diélectriques métallisées d'étroites bandes non métallisées de séparation ou créneaux qui s'étendent transversalement depuis le bord libre ou marge jusqu'à une courte distante du bord surépaissi. On réalise ainsi le long de la feuille des surfaces ou compartiments qui ne sont reliés électriquement les uns aux autres que par d'étroites portions métallisées.

En dépit de cette compartimentation, il peut arriver que l'énergie 1/2 CV2 de la décharge au niveau des portions de liaison soit encore trop faible pour brûler ces étroites portions et que le condensateur soit réellement endommagé. Aussi a-t-on proposé de faire comporter aux feuilles diélectriques des bandes non métalisées orientées longitudinalement et présentant un profil discontinu, afin de déterminer une série de pontets de liaison fusibles aptes à limiter l'énergie à une valeur susceptible de permettre une régénération ou cicatrisation parfaite.

Les résultats obtenus sont satisfaisants sur le plan du comportement du condensateur, mais par contre, la réalisation des bandes interrompues pose des problèmes techniques ardus qui affectent évidemment de manière défavorable le prix de revient des articles finis.

C'est à cet inconvénient qu'entend remédier la présente invention, laquelle consiste essentiellement à faire comporter aux feuilles diélectriques une zone étroite établie à une épaisseur de métal très réduite, ladite zone étant orientée longitudinalement le long du bord surépaissi et étant pénétrée par l'extrémité des bandes transversales ou créneaux de compartimentation.

Les essais ont démontré qu'une telle zone longitudinale amincie, susceptible d'être facilement obtenue lors de la vaporisation du métal sur le film-support, se comportait sur le plan fonctionnel de manière pour le moins aussi satisfaisante que les bandes discontinues classiques.

Le dessin annexé, donné à titre d'exemple, permettra de mieux comprendre l'invention, les caractéristiques qu'elle présente et les avantages qu'elle est susceptible de procurer :

Fig. 1 montre en coupe de manière très schématique une feuille diélectrique métallisée réalisée conformément à la présente invention.

Fig. 2 illustre l'obtention du complexe destiné à être enroulé pour la fabrication d'un condensateur.

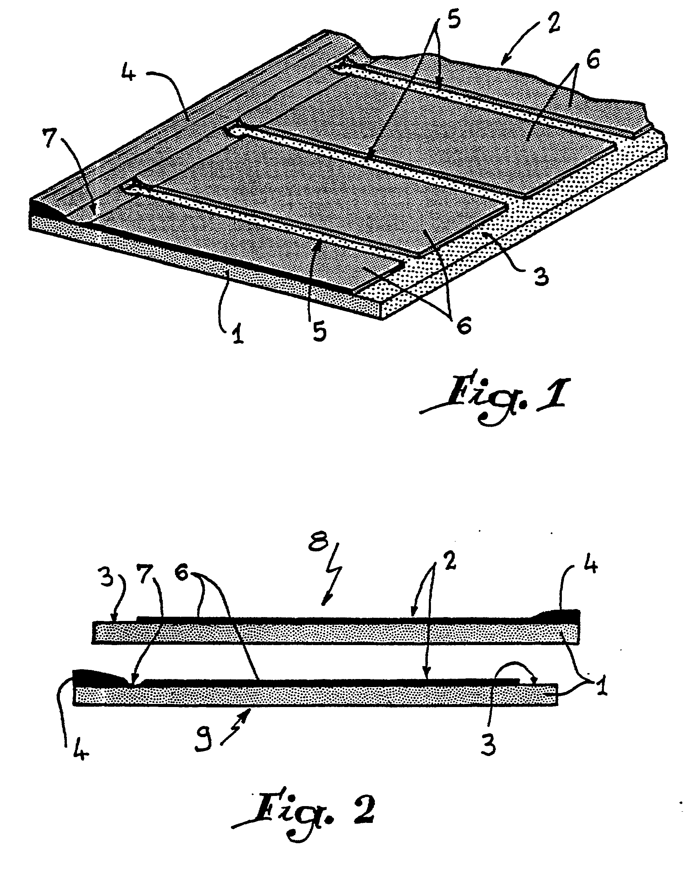

En fig. 1, la référence 1 désigne un film-support du type usuellement utilisé pour la réalisation des feuilles diélectriques, lequel film-support 1, par exemple en papier, est revêtu sur l'une de ses faces d'une couche métallisée 2 obtenue par vaporisation sous vide ou dépôt similaire. A la manière habituelle, cette couche 2 s'arrête à une courte distance de l'un des bords longitudinaux de la bande qui constitue le film-support 1, en définissant de la sorte une bande longitudinale non métallisée ou marge référencée 3. Le long du bord longitudinal opposé, la couche métallisée 2 présente au contraire une surépaisseur continue 4. Enfin et comme à l'accoutumée, cette couche 2 est interrompue par des bandes transversales ou créneaux 5 qui, partant de la marge 3, s'arrêtent immédiatement au droit de la surépaisseur 4, en délimitant ainsi sur la feuille une série de compartiments séparés 6 qui ne communiquent les uns avec les autres qu'au niveau de ladite surépaisseur 4.

Conformément à la présente invention, la zone longitudinale 7 au niveau de laquelle la surépaisseur 4 se raccorde avec chacun des compartiments 6 n'est recouverte que par une très faible épaisseur de revêtement métallique en définissant de la sorte en section un profil substantiellement en forme de cuvette. Bien évidemment, les créneaux transversaux 5 se terminent à l'intérieur de cette zone 7, comme clairement montré sur le dessin.

Les essais ont démontré que la réalisation de la zone 7 était aisée lors de l'opération de métallisation par vaporisation sous vide et que moyennant un calcul précis, on pouvait conférer à chacune des parties de cette zone 7 comprise entre deux créneaux 5 adjacents la résistivité recherchée.

Pour la réalisation du condensateur, on opère à la façon usuelle, en superposant deux feuilles 8 et 9 (fig. 2) disposées de façon à ce que le bord surépaissi 4 de l'une se trouve placé à l'opposé du bord de l'autre, et en introduisant un léger décalage transversal entre lesdites feuilles 8 et 9. Les essais ont révélé que les résultats les plus avantageux avaient été obtenus en utilisant pour le complexe 8-9 une feuille 9 présentant une zone 7 à couche mince et une feuille 8 ne comportant que la bande découverte ou marge 3 sans les créneaux 5 ni la zone 7. Ce complexe 8-9 est enroulé et traité comme de coutume, et l'on a pu observer que lors de la première mise sous tension d'un tel condensateur, le métal qui forme la couche recouvrant la zone 7 de la feuille 9 se vaporise par suite d'un claquage éventuel intervenu entre les différents créneaux 5. Le créneau dans lequel se trouve ce claquage se trouve ainsi isolé et l'énergie 1/2 CV2 contenue dans l'enroulement ne se libère pas au niveau du claquage avec le risque de détruire le condensateur.

Il va de soi qu'on peut constituer le complexe à l'aide de deux feuilles 9 correctement disposées.

De plus et comme il va de soi, l'invention englobe les condensateurs réalisés à l'aide des feuilles diélectriques perfectionnées du type sus-décrit.

## Revendications

1. Feuille diélectrique métallisée pour la réalisation de condensateurs du type bobiné, du genre comprenant un film-support (1) revêtu, sur l'une de ses faces, d'une couche de métal (2) qui laisse à découvert une bande (3) le long de l'un des bords longitudinaux et des bandes ou créneaux transversaux (5) s'étendant jusqu'au niveau du bord longitudinal opposé (4) prévu surépaissi, en déterminant de la sorte des compartiments intermédiaires (6), caractérisée en ce que les compartiments intermédiaires (6) sont connectés au bord surépaissi par des zones longitudinales (7) dont la couche métallisée (2) ne présente qu'une épaisseur très réduite, afin que cette couche se vaporise dans chacune des zones (7) sous l'effet de la décharge créée par un éventuel claquage du diélectrique.

2. Condensateur bobiné, du genre obtenu par enroulement d'un complexe formé par deux feuilles diélectriques métallisées à créneaux, caractérisé en ce que le complexe utilisé comprend au moins une feuille (9) suivant la revendication 1.

## Patentansprüche

1. Metallisierte dielektrische Folie für die Herstellung von Wickelkondensatoren mit einem Trägerfilm (1), der auf einer seiner Seiten mit einer Metallschicht (2) beschichtet ist, die entlang eines der Längsränder einen Streifen (3) und Querstreifen oder -einschnitte (5) freiläßt, die sich bis an den Bereich des gegenüberliegenden, wulstförmig ausgebildeten Randes (4) erstrecken, wobei dadurch Zwischenfelder (6) bestimmt werden, dadurch gekennzeichnet, daß die Zwischenfelder (6) durch Längszonen (7) mit dem wulstförmigen Rand verbunden sind, deren metallisierte Schicht (2) nur eine sehr reduzierte Dicke aufweist, damit diese Schicht in jeder der Zonen (7) unter der Wirkung der Entladung, die durch einen etwaigen Durchschlag des Dielektrikums hervorgerufen wird, verdampft.

2. Wickelkondensator, der durch Einrollen einer aus zwei mit Einschnitten versehenen metallisierten dielektrischen Folien gebildeten Anordnung dargestellt wird, dadurch gekennzeichnet, daß die verwendete Anordnung mindestens eine Folie (9) gemäß Anspruch 1 umfaßt.

## Claims

1. Metallised dielectric foil for producing wound-type capacitors, comprising a support film (1) covered on one of its faces with a metal layer (2) leaving an exposed strip (3) along one of the longitudinal edges and transverse strips or gaps (5) extending as far as the extra-thick opposite longitudinal edge (4), thereby forming intermediate compartments (6), characterised that the intermediate compartments (6) are connected at the extra-thick edge by longitudinal zones (7) in which the metallised layer (2) has only a greatly reduced thickness, so that this layer can vapourise in each of the zones (7) under the effect of the discharge by break of the dielectric.

2. Wound-type capacitor of the type produced by winding a complex formed by two discontinuous metallised dielectric foils, characterised that the complex used includes at least one foil (9) as in claim 1.

1/1

_Fig. 1_

_Fig. 2_